(19) Europäisches Patentamt
European Patent Office
Office européen des brevets

(11) **EP 1 159 797 B1**

(12) **FASCICULE DE BREVET EUROPEEN**

(45) Date de publication et mention
de la délivrance du brevet:
**31.10.2007 Bulletin 2007/44**

(21) Numéro de dépôt: **00903743.3**

(22) Date de dépôt: **07.02.2000**

(51) Int Cl.:
**H04L 9/06** (2006.01)

(86) Numéro de dépôt international:
**PCT/FR2000/000283**

(87) Numéro de publication internationale:
**WO 2000/054454 (14.09.2000 Gazette 2000/37)**

(54) **PROCEDE DE CONTRE-MESURE DANS UN COMPOSANT ELECTRONIQUE METTANT EN OEUVRE UN ALGORITHME DE CRYPTOGRAPHIE A CLE SECRETE**

GEGENMASSNAHMEVERFAHREN IN EINEM ELEKTRONISCHEN BAUSTEIN ZUR AUSFÜHRUNG EINES KRYPTO-ALGORITHMUS MIT GEHEIMSCHLÜSSEL

COUNTERMEASURE METHOD IN AN ELECTRONIC COMPONENT USING A SECRET KEY CRYPTOGRAPHIC ALGORITHM

(84) Etats contractants désignés:
**AT BE CH CY DE DK ES FI FR GB GR IE IT LI LU MC NL PT SE**

(30) Priorité: **08.03.1999 FR 9902834**

(43) Date de publication de la demande:
**05.12.2001 Bulletin 2001/49**

(73) Titulaire: **GEMPLUS**
**13881 Gémenos Cedex (FR)**

(72) Inventeur: **BENOIT, Olivier**
**F-13400 Aubagne (FR)**

(56) Documents cités:
- **NAKAO Y ET AL: "THE SECURITY OF AN RDES CRYPTOSYSTEM AGAINST LINEAR CRYPTANALYSIS" IEICE TRANSACTIONS ON FUNDAMENTALS OF ELECTRONICS, COMMUNICATIONS AND COMPUTER SCIENCES,JP,INSTITUTE OF ELECTRONICS INFORMATION AND COMM. ENG. TOKYO, vol. E79-A, no. 1, page 12-19 XP000558714 ISSN: 0916-8508**

**EP 1 159 797 B1**

## Description

La présente invention concerne un procédé de contre-mesure dans un composant électronique mettant en oeuvre un algorithme de cryptographie à clé secrète. Ils sont utilisés dans des applications où l'accès à des services ou à des données est sévèrement contrôlé. Ils ont une architecture formée autour d'un microprocesseur et de mémoires, dont une mémoire programme qui contient la clé secrète.

Ces composants sont notamment utilisés dans les cartes à puce, pour certaines applications de celles-ci. Ce sont par exemple des applications d'accès à certaines banques de données, des applications bancaires, des applications de télépéage, par exemple pour la télévision, la distribution d'essence ou encore le passage de péages d'autoroutes.

Ces composants ou ces cartes mettent donc en oeuvre un algorithme de cryptographie à clé secrète, dont le plus connu est l'algorithme DES (pour *Data Encryption Standard* dans la littérature anglo-saxonne). D'autres algorithmes à clé secrète existent, comme l'algorithme RC5 ou encore l'algorithme COMP128. Cette liste n'est bien sûr pas exhaustive.

De manière générale et succincte, ces algorithmes ont pour fonction de calculer un message chiffré à partir d'un message appliqué en entrée (à la carte) par un système hôte (serveur, distributeur bancaire...) et de la clé secrète contenue dans la carte, et de fournir en retour au système hôte ce message chiffré, ce qui permet par exemple au système hôte d'authentifier le composant ou la carte, d'échanger des données...

Or il est apparu que ces composants ou ces cartes sont vulnérables à des attaques consistant en une analyse différentielle de consommation en courant et qui permettent à des tiers mal intentionnés de trouver la clé secrète. Ces attaques sont appelées attaques DPA, acronyme anglo-saxon pour *Differential Power Analysis.*

Le principe de ces attaques DPA repose sur le fait que la consommation en courant du microprocesseur exécutant des instructions varie selon la donnée manipulée.

Notamment, une instruction du microprocesseur manipulant un bit de donnée génère deux profils de courant différents selon que ce bit vaut "1" ou "0". Typiquement, si l'instruction manipule un "0", on a à cet instant d'exécution une première amplitude du courant consommé et si l'instruction manipule un "1", on a une deuxième amplitude du courant consommé, différente de la première.

Les caractéristiques des algorithmes de cryptographie sont connues : calculs effectués, paramètres utilisés. La seule inconnue est la clé secrète contenue en mémoire programme. Celle-ci ne peut être déduite de la seule connaissance du message appliqué en entrée et du message chiffré fourni en retour.

Cependant, dans un algorithme de cryptographie, certaines données calculées dépendent seulement du message appliqué en clair en entrée de la carte et de la clé secrète contenue dans la carte. D'autres données calculées dans l'algorithme peuvent aussi être recalculées seulement à partir du message chiffré (généralement fourni en clair en sortie de la carte vers le système hôte) et de la clé secrète contenue dans la carte. Plus précisément, chaque bit de ces données particulières peut être déterminé à partir du message d'entrée ou de sortie, et d'un nombre limité de bits particuliers de la clé.

Ainsi, à chaque bit d'une donnée particulière, correspond une sous-clé formée par un groupe particulier de bits de la clé.

Les bits de ces données particulières qui peuvent être prédites sont appelés dans la suite, bits cibles.

L'idée de base de l'attaque DPA est ainsi d'utiliser la différence du profil de consommation en courant d'une instruction selon qu'elle manipule un "1" ou un "0" et la possibilité de calculer un bit cible par les instructions de l'algorithme à partir d'un message connu d'entrée ou de sortie et d'une hypothèse sur la sous-clé correspondante.

Le principe de l'attaque DPA est donc de tester une hypothèse de sous-clé donnée, en appliquant sur un grand nombre de courbes de mesure en courant, chacune relative à un message d'entrée connu de l'attaquant, une fonction booléenne de sélection, fonction de l'hypothèse de sous-clé, et définie pour chaque courbe par la valeur prédite pour un bit cible.

En faisant une hypothèse sur la sous-clé concernée, on est en effet capable de prédire la valeur "0" ou "1" que va prendre ce bit cible pour un message d'entrée ou de sortie donné.

On peut alors appliquer comme fonction booléenne de sélection, la valeur prédite "0" ou "1" par le bit cible pour l'hypothèse de sous-clé considérée, pour trier ces courbes en deux paquets : un premier paquet regroupe les courbes qui ont vu la manipulation du bit cible à "0" et un deuxième paquet regroupe les courbes qui ont vu la manipulation du bit cible à "1" selon l'hypothèse de sous-clé. En faisant la moyenne de consommation en courant dans chaque paquet, on obtient une courbe de consommation moyenne $M0(t)$ pour le premier paquet et une courbe de consommation moyenne $M1(t)$ pour le deuxième paquet.

Si l'hypothèse de sous-clé est juste, le premier paquet regroupe réellement toutes les courbes parmi les N courbes qui ont vu la manipulation du bit cible à "0" et le deuxième paquet regroupe réellement toutes les courbes parmi les N courbes qui ont vu la manipulation du bit cible à "1". La courbe moyenne de consommation $M0(t)$ du premier paquet aura alors une consommation moyenne partout sauf aux moments de l'exécution des instructions critiques, avec un profil de consommation en courant caractéristique de la manipulation du bit cible à "0" ($profil_0$). En d'autres termes, pour toutes ces courbes tous les bits manipulés ont eu autant de chances de valoir "0" que de valoir "1", sauf le bit cible qui a toujours eu la valeur "0". Ce qui peut s'écrire :

$$M0(t)=[(profil_0+profil_1)/2]_{t\neq tci} + [profil_0]_{tci} \text{ soit } M0(t)=[Vm_t]_{t\neq tci} + [profil_0]_{tci}$$

où tci représente les instants critiques, auxquels une instruction critique a été exécutée.

De même, la courbe moyenne de consommation M1(t) du deuxième paquet correspond à une consommation moyenne partout sauf aux moments de l'exécution des instructions critiques, avec un profil de consommation en courant caractéristique de la manipulation du bit cible à "1" ($profil_1$). On peut écrire :

$$M1(t)=[(profil_0+profil_1)/2]_{t\neq tci} + [profil_1]_{tci} \text{ soit } M1(t)=[Vm_t]_{t\neq tci} + [profil_1]_{tci}$$

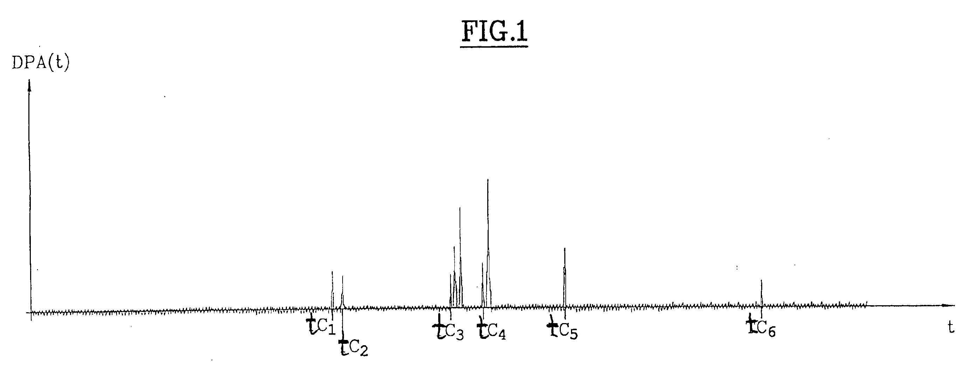

On a vu que les deux profils $profil_0$ et $profil_1$ ne sont pas égaux. La différence des courbes M0(t) et M1(t) donne alors un signal DPA(t) dont l'amplitude est égale à $profil_0$-$profil_1$ aux instants critiques tci d'exécution des instructions critiques manipulant ce bit, c'est à dire, dans l'exemple représenté sur la figure 1, aux endroits tc0 à tc6 et dont l'amplitude est à peu près égale à zéro en dehors des instants critiques.

Si l'hypothèse de sous-clé est fausse, le tri ne correspond pas à la réalité. Statistiquement, il y a alors dans chaque paquet, autant de courbes ayant vu réellement la manipulation du bit cible à "0" que de courbes ayant vu la manipulation du bit cible à "1". La courbe moyenne résultante M0(t) se situe alors autour d'une valeur moyenne donnée par $(profil_0+profil_1)/2=Vm$, car pour chacune des courbes, tous les bits manipulés, y compris le bit cible ont autant de chances de valoir "0" que de valoir "1".

Le même raisonnement sur le deuxième paquet conduit à une courbe moyenne de consommation en courant M1(t) dont l'amplitude se situe autour d'une valeur moyenne donnée par $(profil_0+profil_1)/2=Vm$.

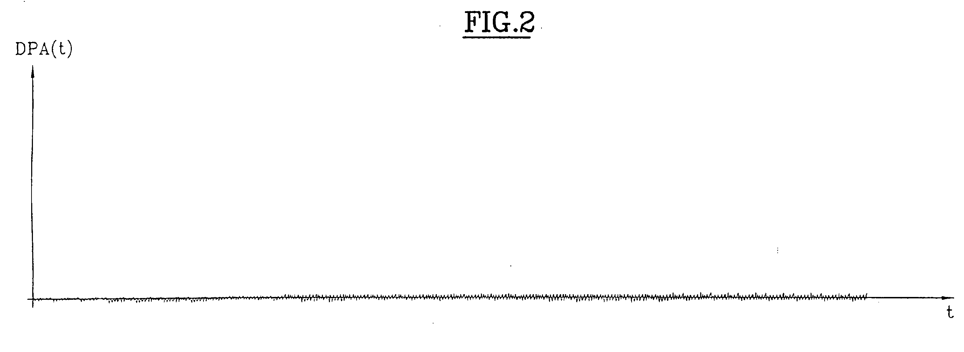

Le signal DPA(t) fourni par la différence M0(t)-M1(t) est dans ce cas sensiblement égal à zéro. Le signal DPA (t) dans le cas d'une hypothèse de sous-clé fausse est représenté sur la figure 2.

Ainsi l'attaque DPA exploite la différence du profil de consommation en courant pendant l'exécution d'une instruction suivant la valeur du bit manipulé, pour effectuer un tri de courbes de consommation en courant selon une fonction de sélection booléenne pour une hypothèse de sous-clé donnée. En effectuant une analyse différentielle de la consommation moyenne en courant entre les deux paquets de courbes obtenus, on obtient un signal d'information DPA(t).

Le déroulement d'une attaque DPA consiste alors globalement:

a- à tirer N messages aléatoires (par exemple N égal 1000);
b- à faire exécuter l'algorithme par la carte pour chacun des N messages aléatoires, en relevant la courbe de consommation en courant à chaque fois (mesurée sur la borne d'alimentation du composant);
c- à faire une hypothèse sur une sous-clé;
d- à prédire, pour chacun des messages aléatoires, la valeur prise par un des bits cibles dont la valeur ne dépend que des bits du message (d'entrée ou de sortie) et de la sous-clé prise en hypothèse, pour obtenir la fonction de sélection booléenne;
e- à trier les courbes selon cette fonction de sélection booléenne (c'est à dire selon la valeur "0" ou "1" prédite pour ce bit cible pour chaque courbe sous l'hypothèse de sous-clé);
f- à calculer dans chaque paquet la courbe résultante de consommation moyenne en courant;
g- à effectuer la différence de ces courbes moyennes, pour obtenir le signal DPA(t).

Si l'hypothèse sur la sous-clé est juste, la fonction de sélection booléenne est juste et les courbes du premier paquet correspondent réellement aux courbes pour lesquelles le message appliqué en entrée ou en sortie a donné un bit cible à "0" dans la carte et, les courbes du deuxième paquet correspondent réellement aux courbes pour lesquelles le message appliqué en entrée ou en sortie a donné un bit cible à "1" dans la carte.

On est dans le cas de la figure 1 : le signal DPA(t) n'est donc pas nul aux instants tc0 à tc6 correspondant à l'exécution des instructions critiques (celles qui manipulent le bit cible).

On notera que l'attaquant n'a pas besoin de connaître avec précision les instants critiques. Il suffit qu'il y ait au moins un instant critique dans la période d'acquisition.

Si l'hypothèse de sous-clé n'est pas juste, le tri ne correspond pas à la réalité et on a alors dans chaque paquet autant de courbes correspondant en réalité à un bit cible à "0" que de courbes correspondant à un bit cible à "1". Le signal DPA(t) est sensiblement nul partout (cas représenté à la figure 2). Il faut retourner à l'étape c- et faire une nouvelle hypothèse sur la sous-clé.

Si l'hypothèse s'avère juste, on peut passer à l'évaluation d'autres sous-clés, jusqu'à avoir reconstitué la clé au maximum. Par exemple, avec un algorithme DES, on utilise une clé de 64 bits, dont seulement 56 bits utiles. Avec une attaque DPA, on est capable de reconstituer au moins 48 bits des 56 bits utiles.

Deux documents concernant l'arrière plan technologique sont cités ci-dessous. Il s'agit des documents NAKAO Y ET AL : « THE SECURITY OF AN RDES CRYPTOSYSTEM AGAINST LINEAR CRYPTANALYSIS », IEICE TRANSACTIONS ON FUNDAMENTALS OF ELECTRONICS, COMMUNICATIONS AND COMPUTER SCIENCES, JP, INSTITUTE OF ELECTRONICS INFORMATION AND COMM.ENG.TOKYO, vol.E79-A, no.1, page 12-19 XP000558714 ISSN :0916-8508, noté D1 et WO 00 27068, noté D2.

Le document D1 concerne un cryptosystème utilisant le DES pour être sécurisé.

Le Document D2 concerne un composant électronique mettant en oeuvre un algorithme a clé secrète ; la mise en oeuvre de cet algorithme comprend l'utilisation de premiers moyens à partir d'une donnée d'entrée (E) pour fournir une donnée de sortie.

La présente invention a pour but de mettre en oeuvre dans un composant électronique, un procédé de contre-mesure contre des attaques par analyse différentielle qui entraîne un signal DPA(t) nul, même dans le cas où l'hypothèse de sous-clé est juste.

De cette façon, rien ne permet de distinguer le cas de l'hypothèse de sous-clé juste des cas d'hypothèses de sous-clé fausses. Par cette contre-mesure, le composant électronique est paré contre les attaques DPA.

On sait par la demande française FR 2 785 477 publiée le 5 Mai 2000, par la société GEMPLUS et dont le contenu en entier fait partie intégrante de la présente demande, qu'il ne suffit pas de faire en sorte que le signal DPA (t) soit nul relativement à un bit cible donné.

En effet, si on considère la valeur prise par plusieurs bits cibles d'une même donnée manipulée par les instructions critiques, on va devoir trier les courbes non plus en deux paquets, mais en plusieurs paquets. On n'a plus une fonction de sélection binaire. On peut montrer qu'en regroupant ensuite ces paquets d'une manière ou d'une autre, on peut obtenir un signal DPA (t) non nul dans le cas d'une hypothèse de sous-clé juste, alors qu'il aurait été nul si l'on avait trié selon une fonction de sélection binaire sur un seul bit cible.

Prenons par exemple deux bits cibles d'une même donnée. Ces deux bits cibles peuvent prendre les $2^2$ valeurs suivantes : "00", "01", "10" et "11".

En appliquant la fonction de sélection aux N=1000 courbes de consommation en courant mesurées, on obtient quatre paquets de courbes. Si le tri est juste, un premier paquet de 250 courbes environ correspond à la valeur "00", un deuxième paquet de 250 courbes environ correspond à la valeur "01", un troisième paquet de 250 courbes environ correspond à la valeur "10" et un quatrième paquet de 250 courbes environ correspond à la valeur "11".

Si on regroupe les premier et quatrième paquets dans un premier groupe et les deuxième et troisième paquets dans un deuxième groupe, on obtient deux groupes qui ne sont pas équivalents.

Dans le premier groupe, les deux bits ont autant de chances de valoir "00" que de valoir "11". La valeur moyenne aux instants critiques de toutes les courbes de consommation de ce groupe peut s'écrire :

$$M1\ (t_{ci}) = [consommation("00") + consommation\ ("11")]/2$$

Dans le deuxième groupe, les deux bits ont autant de chances de valoir "01" que de valoir "10". La valeur moyenne aux instants critiques de toutes les courbes de consommation de ce groupe peut s'écrire :

$$M2\ (t_{ci}) = [consommation("01") + consommation\ ("10")]/2$$

Si on fait la différence entre ces deux moyennes, on obtient un signal DPA (t) non nul. En d'autres termes, les deux groupes dont on compare les consommations moyennes n'ont pas un contenu équivalent.

Dans la demande française précitée, on a cherché à empêcher l'obtention d'un quelconque signal significatif au sens de l'attaque DPA. Quel que soit le nombre de bits cibles pris, quelle que soit la combinaison de paquets effectuée pour faire la comparaison des consommations moyennes, le signal DPA(t) sera toujours nul. Pour cela il faut obtenir des paquets équivalents, quel que soit le nombre de bits cibles considérés.

La demande française précitée propose comme solution à ces différents problèmes techniques, l'utilisation d'une valeur aléatoire dans une opération de OU EXCLUSIF avec au moins des données de sortie de moyens de calcul utilisés dans l'algorithme.

Avec l'utilisation d'une telle valeur aléatoire, les données manipulées par les instructions critiques deviennent imprédictibles tout en ayant un résultat juste en sortie de l'algorithme.

Dans l'invention, on s'est cependant rendu compte que des attaques pourraient encore être réalisées avec succès à des endroits bien déterminés dans l'exécution de l'algorithme, notamment en entrée et en sortie de l'algorithme.

La présente invention a pour objet un procédé de contre-mesure dans lequel ces attaques sont également rendues impossibles. Selon l'invention, on utilise une deuxième valeur aléatoire, appliquée sur les paramètres d'entrée de l'algorithme de cryptographie, dans une opération de ou EXCLUSIF. Cette deuxième valeur aléatoire se propage dans tout l'algorithme, en sorte que les données qui n'étaient pas protégées par la première valeur aléatoire le sont par la deuxième.

Ainsi, selon l'invention, selon l'endroit où l'on se trouve dans l'algorithme, les données sont protégées soit par la première valeur-aléatoire, soit par la deuxième, soit par une combinaison de ces deux valeur-aléatoires.

Telle que caractérisée, l'invention concerne donc un procédé de contre-mesure dans un composant électronique mettant en oeuvre un algorithme cryptographique à clé secrète, dont la mise en oeuvre comprend plusieurs tours de calculs successifs pour fournir à partir de premières données d'entrée appliquées au premier tour, des données finales en sortie du dernier tour permettant l'élaboration d'un message chiffré, chaque tour de calcul utilisant des moyens de calcul pour fournir une donnée de sortie à partir d'une donnée d'entrée, lesdits moyens de calcul comprenant l'application d'une première valeur aléatoire (u) pour obtenir en sortie une donnée imprédictible, caractérisé en ce que le procédé comprend l'utilisation des moyens d'application d'une deuxième valeur aléatoire aux-dites première données d'entrée, selon une opération ou EXCLUSIF.

D'autres caractéristiques et avantages de l'invention sont détaillés dans la description suivante faite à titre indicatif et nullement limitatif et en référence aux dessins annexés, dans lesquels :

- les figures 1 et 2 déjà décrites représentent le signal DPA(t) que l'on peut obtenir en fonction d'une hypothèse sur une sous-clé de la clé secrète K, selon une attaque DPA;
- les figures 3 et 4 sont des organigrammes détaillés des premiers et derniers tours de l'algorithme DES, selon l'état de la technique;
- la figure 5 est un schéma-bloc de l'opération SBOX utilisée dans l'algorithme DES tel que présenté sur les figures 3 et 4;
- la figure 6 montre un exemple de table de constantes élémentaire à une entrée et une sortie utilisée dans l'opération SBOX représentée sur la figure 5;
- les figures 7 et 8 représentent respectivement un organigramme d'exécution du DES et un organigramme détaillé des premiers tours, correspondant à un exemple d'application du procédé de contre mesure selon l'état de la technique ;
- la figure 9 représente un organigramme d'exécution du DES selon l'invention; et
- la figure 10 représente un schéma-bloc simplifié d'une carte à puce comportant un composant électronique dans lequel le procédé de contre-mesure selon l'invention est mis en oeuvre.

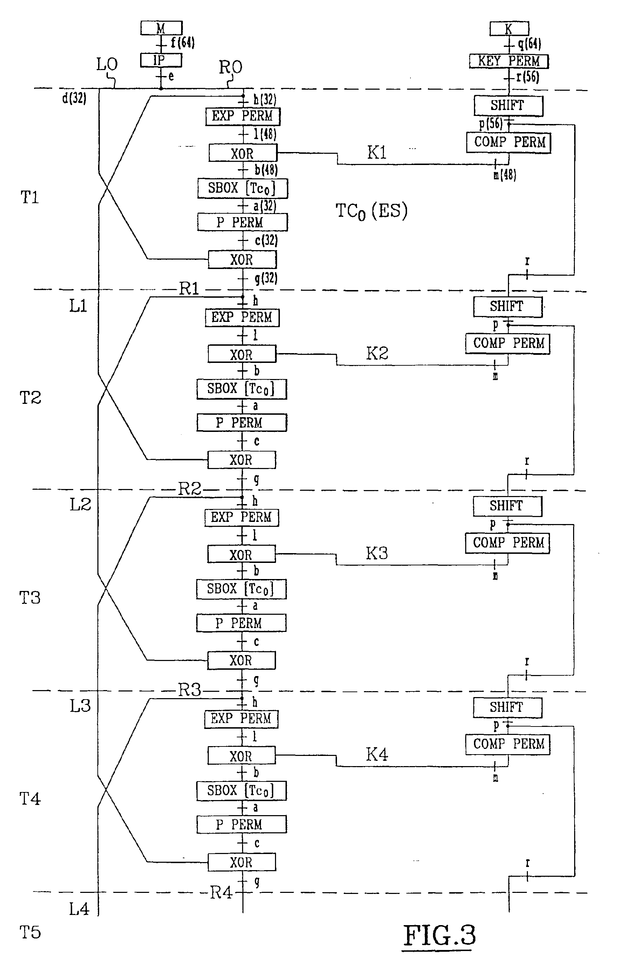

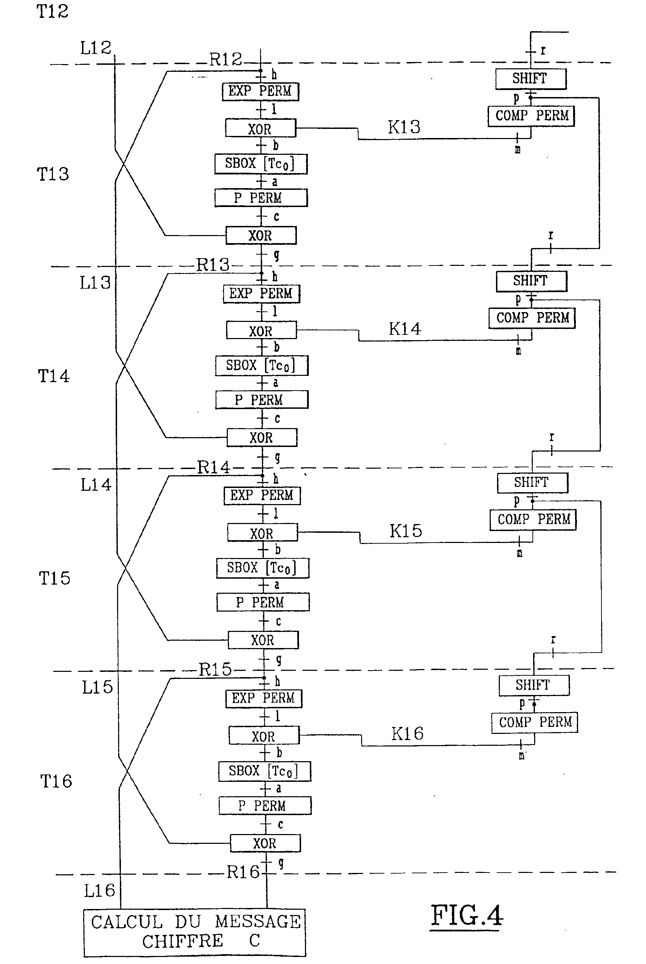

Pour la bonne compréhension de l'invention, on va d'abord décrire l'algorithme cryptographique à clé secrète DES normal, sans procédé de contre-mesure. Cet algorithme DES comporte 16 tours de calcul, notés T1 à T16, comme représenté sur les figures 3 et 4.

Le DES débute par une permutation initiale IP sur le message d'entrée M (figure 3). Le message d'entrée M est un mot f de 64 bits. Après permutation, on obtient un mot e de 64 bits, que l'on coupe en deux pour former les paramètres d'entrée L0 et R0 du premier tour (T1). L0 est un mot d de 32 bits contenant les 32 bits de poids forts du mot e. R0 est un mot h de 32 bits contenant les 32 bits de poids faibles du mot e.

La clé secrète K, qui est un mot q de 64 bits subit elle-même une permutation et une compression pour fournir un mot r de 56 bits.

Le premier tour comprend une opération EXP PERM sur le paramètre R0, consistant en une expansion et une permutation, pour fournir en sortie un mot 1 de 48 bits.

Ce mot 1 est combiné à un paramètre K1, dans une opération de type OU EXCLUSIF notée XOR, pour fournir un mot b de 48 bits. Le paramètre K1 qui est un mot m de 48 bits est obtenu du mot r par un décalage d'une position (opération notée SHIFT sur les figures 3 et 4) suivi d'une permutation et d'une compression (opération notée COMP PERM).

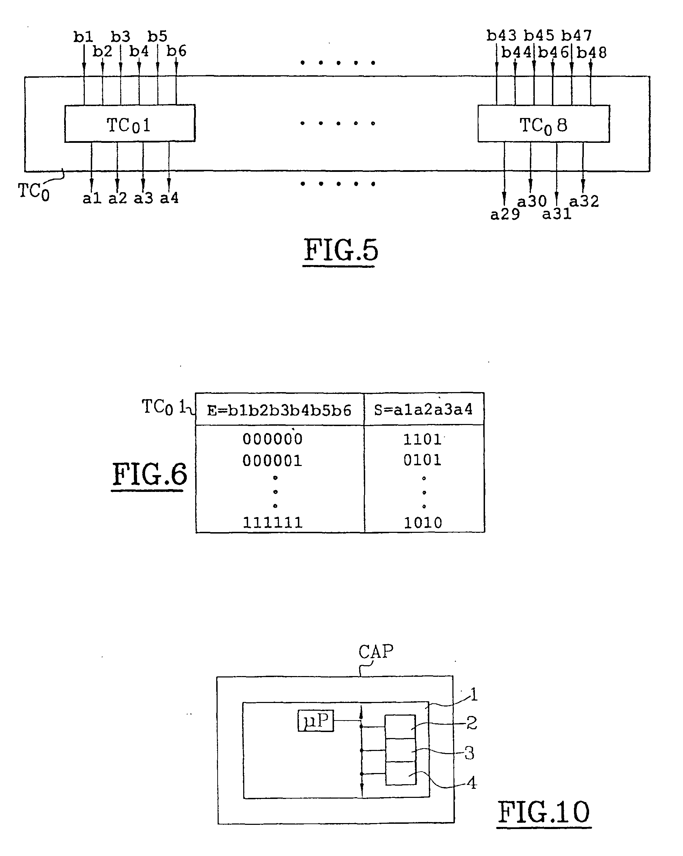

Le mot b est appliqué à une opération notée SBOX, en sortie de laquelle on obtient un mot a de 32 bits. Cette opération particulière sera expliquée plus en détail en relation avec les figures 5 et 6.

Le mot a subit une permutation P PERM, donnant en sortie le mot c de 32 bits.

Ce mot c est combiné au paramètre d'entrée L0 du premier tour T1, dans une opération logique de type OU EXCLUSIF, notée XOR, qui fournit en sortie le mot g de 32 bits.

Le mot h (=RO) du premier tour fournit le paramètre d'entrée L1 du tour suivant (T2) et le mot g du premier tour fournit le paramètre d'entrée R1 du tour suivant. Le mot p du premier tour fournit l'entrée r du tour suivant.

Les autres tours T2 à T16 se déroulent de façon similaire, excepté en ce qui concerne l'opération de décalage SHIFT qui se fait sur une ou deux positions selon les tours considérés.

Chaque tour Ti reçoit ainsi en entrée les paramètres Li-1, Ri-1 et r et fournit en sortie les paramètres Li et Ri et r pour le tour suivant Ti+1.

En fin d'algorithme DES (figure 4), le message chiffré est calculé à partir des paramètres L16 et R16 fournis par le dernier tour T16.

Ce calcul du message chiffré C comprend en pratique les opérations suivantes :

- formation d'un mot e' de 64 bits en inversant la position des mots L16 et R16, puis en les concaténant ;
- application de la permutation IP-1 inverse de celle de début de DES, pour obtenir le mot f' de 64 bits formant le message chiffré C.

L'opération SBOX est détaillée sur les figures 5 et 6. Elle comprend une table de constantes $TC_0$ pour fournir une donnée de sortie a en fonction d'une donnée d'entrée b.

En pratique, cette table de constantes $TC_0$ se présente sous la forme de huit tables de constantes élémentaires $TC_0 1$ à $TC_0 8$, chacune recevant en entrée seulement 6 bits du mot b, pour fournir en sortie seulement 4 bits du mot a.

Ainsi, la table de constante élémentaire $TC_0 1$ représentée sur la figure 6 reçoit comme donnée d'entrée, les bits b1 à b6 du mot b et fournit comme donnée de sortie les bits a1 à a4 du mot a.

En pratique ces huit tables de constantes élémentaires $TC_0 1$ à $TC_0 8$ sont mémorisées en mémoire programme du composant électronique.

Dans l'opération SBOX du premier tour T1, un bit particulier de la donnée a de sortie de la table de constante $TC_0$ dépend de seulement 6 bits de la donnée b appliquée en entrée, c'est à dire de seulement 6 bits de la clé secrète K et du message d'entrée (M).

Dans l'opération SBOX du dernier tour T16, un bit particulier de la donnée a de sortie de la table de constante $TC_0$ peut être recalculé à partir de seulement 6 bits de la clé secrète K et du message chiffré (C).

Or si on reprend le principe de l'attaque DPA, si on choisit un ou des bits de la donnée de sortie a comme bits cibles, il suffit de faire une hypothèse sur 6 bits de la clé K, pour prédire la valeur du ou des bits cibles pour un message d'entrée (M) ou de sortie (C) donné. En d'autres termes, pour le DES, il suffit de faire une hypothèse sur une sous-clé de 6 bits.

Dans une attaque DPA sur un tel algorithme pour un ensemble de bits cibles donné issu d'une table de constantes élémentaire donnée, on a donc à discriminer une hypothèse de sous-clé juste parmi 64 possibles.

Ainsi, à partir des bits de sortie des huit tables de constantes élémentaires $TC_0 1$ à $TC_0 8$, on peut découvrir jusqu'à 8x6=48 bits de la clé secrète, en faisant des attaques DPA sur des bits cibles correspondants.

Dans le DES, on trouve donc des instructions critiques au sens des attaques DPA au début de l'algorithme et à la fin. Ces instructions sont détaillées dans la demande française FR 98 13605 à laquelle on pourra se reporter utilement.

Et il ressort que toutes les données manipulées par des instructions critiques sont une donnée de sortie ou des données dérivées d'une donnée de sortie d'une opération SBOX de début et de fin de DES.

Le procédé de contre-mesure décrit dans la demande française précitée appliqué à cet algorithme DES consiste à rendre imprédictible chacune des données manipulées par les instructions critiques. Ainsi, quel que soit le ou les bits cibles utilisés, le signal DPA(t) sera toujours nul. Ce procédé de contre-mesure est appliqué aux instructions critiques de début de DES et aux instructions critiques de fin de DES.

En prenant les opérations SBOX comme premiers moyens de calcul pour fournir une donnée de sortie S=a à partir d'une donnée d'entrée E=b, le procédé de contre-mesure de la demande française précitée appliqué à l'algorithme DES consiste à utiliser d'autres moyens de calcul à la place des premiers, pour rendre imprédictible la donnée de sortie, en sorte que cette donnée de sortie et/ou des données dérivées manipulées par les instructions critiques soient toutes imprédictibles.

Ces autres moyens peuvent comprendre différents moyens. Ils sont calculés à partir des premiers moyens en appliquant un OU exclusif avec une valeur aléatoire u (ou une valeur aléatoire dérivée) sur l'une et/ou sur l'autre des données d'entrée et de sortie des premiers moyens.

L'utilisation de cette valeur aléatoire u est telle que le résultat en sortie de l'algorithme, c'est à dire, le message chiffré C reste juste.

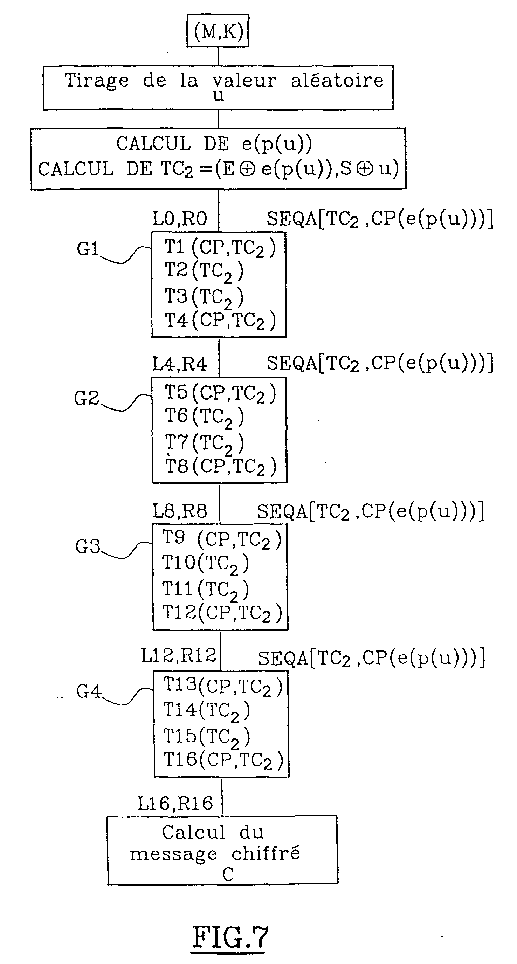

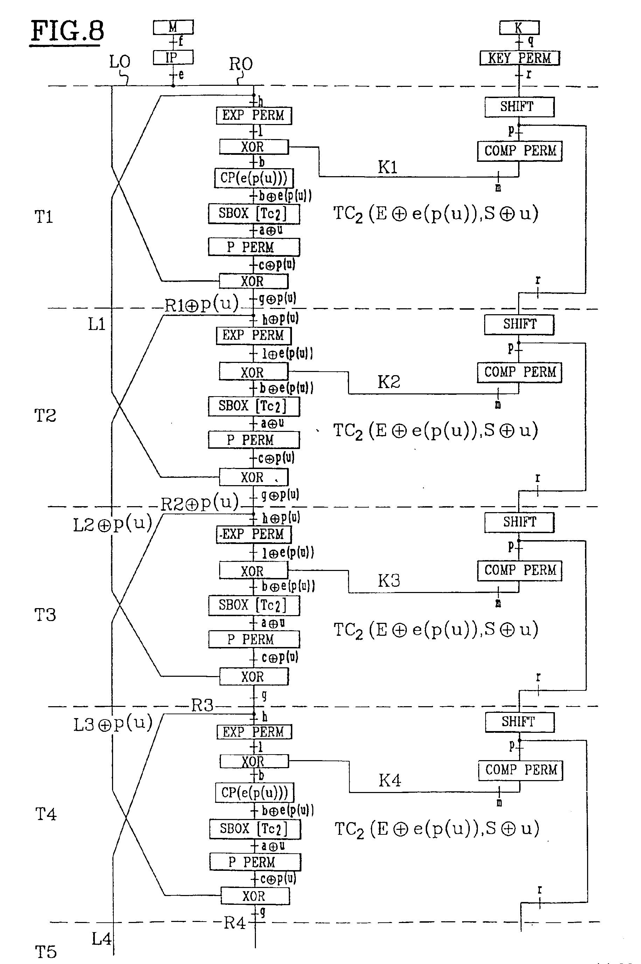

Les figures 7 et 8 représentent un exemple d'application de ce procédé de contre-mesure, qui correspond à la figure 10 de la demande française précitée.

Dans une exécution classique de l'algorithme DES, on a vu que chaque tour comprend l'utilisation de premiers moyens $TC_0$ dans une opération SBOX.

Dans cet exemple, et comme représenté sur la figure 7, on calcule d'autres moyens en faisant un OU EXCLUSIF avec une valeur aléatoire u sur les données de sortie des premiers moyens $TC_0$ et en faisant un OU EXCLUSIF avec une valeur dérivée e(p(u)) sur les données d'entrée des premiers moyens $TC_0$. Puis on applique une séquence SEQA d'exécution identique sur chaque groupe, qui consiste à utiliser ces autres moyens calculés.

Dans ce procédé, on utilise donc une valeur aléatoire u qui est une donnée de 32 bits. On peut par exemple tirer une valeur aléatoire de 32 bits, ou bien tirer une valeur aléatoire de 4 bits et les recopier 8 fois pour obtenir la valeur aléatoire sur 32 bits.

On calcule alors la variable dérivée égale à e(p(u)), où p(u) correspond au résultat de l'opération P PERM appliquée sur la valeur u et où e(p(u)) est le résultat de l'opération EXP PERM appliquée à la valeur p(u).

On peut alors calculer les autres moyens utilisés par ce procédé de contre-mesure.

Dans l'exemple représenté en référence à la figure 7, ces autres moyens comprennent des deuxièmes moyens $TC_2$ et une opération ou EXCLUSIF supplémentaire notée CP.

Les deuxièmes moyens $TC_2$ sont utilisés dans chacun des tours.

Ils sont calculés en appliquant un OU EXCLUSIF avec la variable aléatoire dérivée e(p(u)) sur la donnée d'entrée E et en appliquant un OU EXCLUSIF avec la valeur aléatoire u sur la donnée de sortie S des premiers moyens $TC_0$, ce qui peut s'écrire: $TC_2 = (E \oplus e(p(u)), S \oplus u)$.

L'opération OU EXCLUSIF supplémentaire CP avec la variable aléatoire dérivée e(p(u)), permet d'obtenir en entrée des deuxièmes moyens $TC_2$ la donnée $b \oplus 3e(p(u))$. Cette opération est notée CP(e(p(u))) sur les figures 7 et 8.

Cette opération OU EXCLUSIF supplémentaire CP avec la variable e(p(u)) peut être placée en divers endroits des premiers et derniers tours, soit entre l'opération EXP PERM et l'opération XOR ou entre l'opération XOR et l'opération SBOX. On peut la remplacer par une opération OU EXCLUSIF supplémentaire CP avec la variable aléatoire dérivée p(u), en plaçant cette opération supplémentaire CP(p(u)) avant l'opération EXP PERM. On obtient en sortie $1 \oplus e(p(u))$, et donc on aura ensuite $b \oplus e(p(u))$.

Dans tous ces cas de figures, on obtient la donnée $b \oplus e(p(u))$ en entrée de l'opération SBOX.

Le programme de calcul consiste alors au début de l'exécution de l'algorithme, à tirer une valeur aléatoire u, dans l'exemple sur 4 bits, à calculer la variable aléatoire dérivée e(p(u)), puis à calculer les différents moyens utilisés dans la séquence d'exécution SEQA, c'est à dire calculer les deuxièmes moyens $TC_2$.

On obtient, à la sortie de chaque groupe, le résultat juste pour les paramètres de sortie. Ainsi, les paramètres de sortie L4 et R4 du premier groupe G1, L8 et R8 du deuxième groupe G2, L12 et R12 du troisième groupe G3, L16 et R16 du quatrième groupe G4 sont justes quelle que soit la variable aléatoire tirée.

Quand on a effectué tous les tours, on obtient les paramètres justes L16 et R16 qui vont permettre de calculer le message chiffré C juste.

Par contre, à l'intérieur des groupes, certains résultats intermédiaires n'ont pas les mêmes valeurs selon la séquence utilisée, mais des valeurs correspondant à l'opération OU EXCLUSIF avec la valeur aléatoire u ou avec la valeur aléatoire dérivée e(p(u)), ce qui permet d'obtenir la protection contre les attaques DPA.

La figure 8 montre l'organigramme détaillé des quatre tours T1, T2, T3 et T4 du premier groupe G1, dans la séquence SEQA, qui permet de mettre en évidence le rôle des deuxièmes moyens $TC_2$ utilisés dans chaque tour. D'après leur définition: $TC_2 = E \oplus e(p(u)), S \oplus u$, en appliquant en entrée la donnée modifiée aléatoirement $b \oplus e(p(u))$ grâce à l'opération supplémentaire CP, on obtient en sortie la donnée modifiée aléatoirement $a \oplus u$. En conduisant ce raisonnement depuis le tour T1 jusqu'à la fin du tour T4, et en remarquant que $p(u) \oplus p(u) = 0$, on obtient en sortie du tour T4, les données L4, R4 non modifiées.

Avec un tel procédé de contre-mesure, on doit prévoir en début de DES le tirage de la valeur aléatoire u et le calcul des moyens utilisés dans la séquence d'exécution SEQA. Ces moyens calculés à chaque exécution du DES, sont mémorisés, le temps de l'exécution, en mémoire de travail, les premiers moyens $TC_0$ qui servent au calcul étant eux mémorisés en mémoire programme.

Ce procédé de contre-mesure selon l'état de la technique qui consiste donc de manière générale à appliquer une valeur aléatoire u au moins sur la sortie des moyens de calcul utilisés dans chaque tour de l'algorithme, laisse certaines données en clair. Sur les figures 7 et 8 on voit que les données d'entrée, L0, R0, et à leur suite les données h, 1 et b du premier tour sont utilisées en clair.

De même les données R3, D4, R4, R7, L8, R8, R11, L12, R12, R15, L16 et R16 sont utilisées en clair.

D'un manière générale, quelque soit le mode d'application du procédé de contre-mesure de l'état de la technique qui vient d'être décrit, au moins les données d'entrée L0 et R0 et de sortie L16 et R16 sont utilisées en clair dans l'algorithme. D'autres données intermédiaires peuvent l'être, comme dans le cas précédemment décrit, qui dépendent plus particulièrement du mode d'application considéré du procédé de contre-mesure de l'état de la technique, dont les figures 7 et 8 ne montrent qu'un des exemples d'application.

En pratique, des attaques peuvent donc être encore réalisées sur l'algorithme, basées sur ces données utilisées en clair.

La présente invention propose donc un perfectionnement au procédé de contre-mesure précité, qui permet de rendre imprédictibles toutes les données utilisées dans l'algorithme, soit par la première valeur aléatoire u, soit par une deuxième valeur aléatoire notée v, soit par une combinaison des deux.

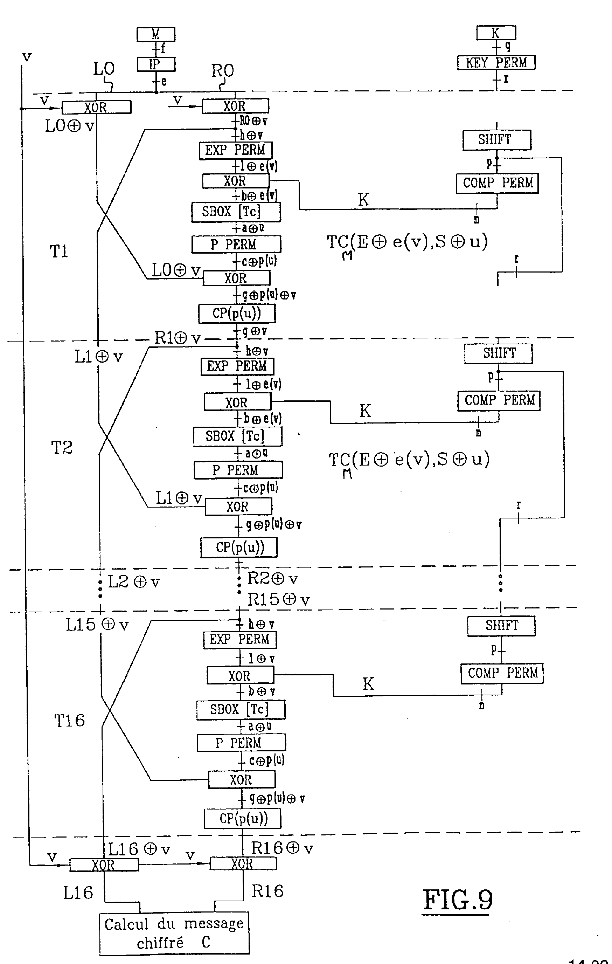

Un exemple de mise en oeuvre de ce procédé est représenté sur la figure 9.

Selon l'invention, une deuxième valeur aléatoire notée v est utilisée, appliquée aux données d'entrée L0 et R0, au moyen d'une opération OU EXCLUSIF.

Ainsi, les données d'entrée réellement utilisées dans le calcul de l'algorithme, sont des données imprédictibles égales à $L0 \oplus v$ et $R0 \oplus v$.

Cette deuxième valeur aléatoire se propage dans chacun des tours de l'algorithme. En sortie du seizième tour T16, on obtient donc comme données de sortie, les données imprédictibles égales à L16⊕v et R16⊕v.

Pour retrouver les données de sortie vraies L16 et R16 qui vont permettre d'obtenir le message chiffré C, on applique sur chacune de ces' données L16⊕v et R16⊕Dv, une opération OU EXCLUSIF avec la deuxième valeur aléatoire v.

L'utilisation des deux valeurs aléatoires u et v en combinaison permet d'obtenir un procédé de contre-mesure perfectionné, rendant inattaquable l'algorithme DES qui le met en oeuvre.

Sur la figure 9, on a détaillé un exemple de mise en oeuvre pratique d'un procédé de contre-mesure selon l'invention.

Si on prend le premier tour T1, on a en entrée les données L0⊕v et R0⊕v auxquelles on applique successivement les opérations EXP PERM, XOR (avec la clé K1). On se retrouve donc en entrée de l'opération SBOX avec la donnée b⊕v.

Les moyens de calcul $TC_M$ associés à cette opération SBOX consistent comme dans le procédé de contre-mesure de l'état de la technique en une table de constantes déduite de la table de constantes d'origine $TC_0$ de l'algorithme DES.

En notant cette table de constantes d'origine $TC_0 = (E, S)$ comme vu en relation avec la figure 6, on calcule les nouveaux moyens de calcul $TC_M$ de la manière suivante :

$$TC_M = (E \oplus e(v), S \oplus u).$$

De cette manière, on tient compte de la deuxième valeur aléatoire v appliquée aux données en entrée de chaque tour, et on bénéficie toujours de la première valeur aléatoire, u selon le procédé de l'état de la technique, en sortie de l'opération SBOX.

Ainsi, en sortie de l'opération SBOX utilisant les moyens de calcul $TC_M$, on obtient la donnée a⊕p(u), sur laquelle on applique l'opération P PERM, donnant la donnée c⊕+p(u).

L'opération XOR suivante avec la donnée d'entrée L0⊕3v fournit en sortie la donnée g⊕p(u)⊕v.

On rappelle que dans l'état de la technique décrit (FIG.8), on obtenait à ce stade la donnée g⊕p(u) utilisée en entrée du deuxième tour T2.

Avec le procédé selon l'invention, l'autre entrée du deuxième tour est la donnée L1⊕v = R0⊕v, comme indiqué sur la figure 9.

La deuxième valeur aléatoire v se propage donc dans tous les tours de l'algorithme.

Si on ne fait pas disparaître la valeur aléatoire u de la donnée de sortie du premier tour (R1⊕(v)⊕p(u)), il faut prévoir l'utilisation d'autres moyens de calcul $TC_M$' dans le deuxième tour T2, définis par $TC_M$' = E⊕e(v)⊕e(p(u)), S⊕u.

Cette mise en oeuvre de l'invention n'est pas très intéressante, car elle nécessite le calcul de deux nouvelles tables de constantes $TC_M$ et $TC_M$', la valeur aléatoire u étant appliquée dans la table $TC_M$', non seulement sur la sortie, mais aussi sur l'entrée.

Aussi, selon l'invention, et comme représenté sur la figure 9, pour faciliter l'utilisation des deux variables aléatoires u et v en réduisant les calculs nécessaires à sa mise en oeuvre et pour reproduire les mêmes opérations dans chaque tour, on prévoit une opération OU EXCLUSIF supplémentaire notée CP(p(u)) en fin de chaque tour, de manière à faire disparaître la valeur p(u) en entrée de chaque nouveau tour. Ainsi, en entrée du deuxième tour T1, on obtient la donnée R1⊕v = (g⊕p(u)⊕v)⊕p(u), soit

$$R1 \oplus v = g \oplus v.$$

Chaque tour se succède alors en exécutant la même suite d'opérations de calcul, alors en sorte qu'en sortie du seizième tour, on obtient comme données de sortie, L16 ⊕v et R16⊕v. En appliquant une opération de OU EXCLUSIF avec la deuxième valeur aléatoire v sur chacune de ces deux données, on obtient les données L16 et R16 qui permettent l'élaboration du message chiffré C.

En appliquant le procédé de contre-mesure selon l'invention qui combine l'utilisation d'une première valeur aléatoire u dans des moyens de calculs prévus dans chaque tour et l'utilisation d'une deuxième valeur aléatoire appliquée en entrée, avant l'exécution du premier tour, on rend imprédictibles toutes les données utilisées dans l'algorithme. Selon l'endroit où l'on se trouve dans l'algorithme, la protection par contre-mesure selon l'invention est assurée soit par la première valeur aléatoire u, soit par la deuxième valeur aléatoire v, soit par une combinaison de ces deux valeurs.

En pratique, et dans l'exemple d'application représenté sur la figure 9, avant d'exécuter l'algorithme DES proprement dit, il faut exécuter les opérations suivantes :

- tirage des valeurs aléatoires u et v
- calcul de p(u) pour l'opération CP(p(u))
- calcul de e(v)
- calcul de $TC_M$ = E⊕e(v), S⊕u.

La valeur aléatoire v est une donnée comportant le même nombre bits que les données L0 et R0, soit 32 bits dans l'exemple. Dans ce procédé, on utilise donc une valeur aléatoire v qui est une donnée de 32 bits. On peut par exemple tirer une valeur aléatoire de 32 bits, ou bien tirer une valeur aléatoire de 4 bits et les recopier 8 fois pour obtenir la, valeur aléatoire sur 32 bits (comme pour la valeur aléatoire u).

D'autres exemples d'application peuvent être envisagés, dans lesquels on peut notamment prévoir que les tours ne sont pas identiques. Toutes ces variantes qui utilisent les deux valeurs aléatoires selon le principe général exposé sont du domaine de l'invention.

Un composant électronique 1 mettant en oeuvre un procédé de contre-mesure selon l'invention dans un algorithme de cryptographie à clé secrète DES, comprend typiquement, comme représenté sur la figure 10, un microprocesseur mP, une mémoire programme 2 et une mémoire de travail 3. Les différents moyens de calcul $TC_0$ et $TC_M$ sont, en pratique, des tables de constantes mémorisées respectivement en mémoire programme 1 et en mémoire de travail 3. Pour pouvoir gérer l'utilisation, de ces moyens de calcul, des moyens 4 de génération d'une valeur aléatoire sont prévus qui, si on se reporte aux organigrammes des figures 7 et 11, fourniront les valeurs aléatoires u et v à chaque exécution du DES. Un tel composant peut tout particulièrement être utilisé dans une carte à puce 5, pour améliorer son inviolabilité.

## Revendications

1. Procédé de contre-mesure contre des attaques par analyse différentielle dans un composant électronique mettant en oeuvre un algorithme cryptographique à clé secrète (K), procédé dont la mise en oeuvre comprend la réalisation de plusieurs tours de calculs successifs (T1,... T16) pour fournir à partir de premières données d'entrée (L0, RO) appliquées au premier tour (T1), des données finales (L16, R16) en sortie du dernier tour (T16) permettant l'élaboration d'un message chiffré (C), le procédé étant **caractérisé en ce qu'**il comprend:

   • à chaque tour de calcul, l'utilisation de moyens de calcul (TCM) pour fournir une donnée de sortie combinée par un OU-EXCLUSIF à une première valeur aléatoire (S⊕u) à partir d'une donnée d'entrée combinée à une deuxième valeur aléatoire (E⊕e(v)),
   • l'utilisation de moyens de combinaison par OU-EXCLUSIF, de la deuxième valeur aléatoire (v) aux-dites premières données d'entrée (L0, R0).

2. Procédé de contre-mesure selon la revendication 1, **caractérisé en ce qu'**il comprend en outre l'utilisation de moyens de combinaison par OU-EXCLUSIF de la deuxième valeur aléatoire (v) avec les données finales fournies par le dernier tour (T16).

3. Procédé de contre mesure selon l'une quelconque des revendications précédentes, **caractérisé en ce qu'**il comprend également, à la fin de chaque tour, l'exécution d'une opération supplémentaire (CP(p(u))) pour faire disparaître ladite première valeur aléatoire (u) en sortie de chaque tour.

4. Procédé de contre-mesure selon l'une quelconque des revendications précédentes, **caractérisé en ce qu'**il comprend le tirage des première et deuxième valeurs aléatoires (u, v) et le calcul des moyens de calcul ($TC_M$) utilisés dans chaque tour pour chaque nouvelle exécution de l'algorithme.

5. Procédé selon l'une des revendications 1 à 4, **caractérisé en ce que** les dits moyens de calculs ($TC_M$) sont calculés à partir de premiers moyens de calculs ($TC_0$) définissant pour des données d'entrée (E), des données de sortie (S) correspondantes, en appliquant la deuxième valeur aléatoire (v) aux dites données d'entrée (E⊕e(v)) et en appliquant la première valeur aléatoire (u) au moins aux dites données de sortie (s⊕u) des premiers moyens de calcul.

6. Procédé de contre-mesure selon la revendication 5, **caractérisé en ce que** les moyens de calculs ($TC_0$, $TC_M$) sont des tables de constantes.

7. Composant électronique de sécurité adapté pour la mise en oeuvre d'un procédé de contre-mesure contre des attaques par analyse différentielle, le dit procédé comprenant la mise en oeuvre d'un algorithme cryptographique à clé secrète (K) comprenant la réalisation de plusieurs tours de calculs successifs (T1, ...T16) pour fournir à partir de premières données d'entrée (L0, R0) appliquées au premier tour (T1), des données finales (L16, R16) en sortie du dernier tour (T16) permettant l'élaboration d'un message chiffré (C), le composant étant **caractérisé en ce que** qu'il comprend

- • une mémoire programme (1), pour mémoriser des premiers moyens de calcul (TC0),
- • des moyens (4) pour générer, à chaque exécution du procédé, une première valeur aléatoire (u), une deuxième valeur aléatoire (v) et des moyens de calcul (TCM) adaptés pour fournir une donnée de sortie combinée par un OU-EXCLUSIF à la première valeur aléatoire (S⊕u) à partir d'une donnée d'entrée combinée à une deuxième valeur aléatoire (E⊕v),
- • une mémoire de travail (3) pour mémoriser les moyens de calcul (TCM) calculés, et
- • des moyens pour combiner par un OU-EXCLUSIF la deuxième valeur aléatoire aux dites premières données d'entrée.

**8.** Carte à puce comprenant un composant électronique de sécurité selon la revendication 7.

**Claims**

**1.** A counter-measure method against attacks by a differential analysis in an electronic component implementing a private-key (K) cryptographic algorithm, a method the implementation of which comprises the carrying out of several successive calculation cycles (T1,... T16) in order to provide, from first input data (L0, RO) applied to the first cycle (T1), final data (L16, R16) at the output of the last cycle (T16), allowing the production of an encrypted message (C), the method being **characterized in that** it comprises:

- at each calculation cycle, the use of calculation means (TCM) to provide an output data combined by an OR-EXCLUSIVE to a first random value (S⊕u) from an input data combined to a second random value (E ⊕ e(v)),
- the use of combination means by OR-EXCLUSIVE, of the second random value (v) to said first input data (L0, RO).

**2.** A counter-measure method according to claim 1, **characterized in that** it further comprises the use of combination means by OR-EXCLUSIVE of the second random value (v) with the final data provided by the last cycle (T16).

**3.** A counter-measure method according to any one of the preceding claims, **characterized in that** it also comprises, at the end of each cycle, the execution of an additional operation (CP(p(u))) to make said first random value (u) disappear at the output of each cycle.

**4.** A counter-measure method according to any one of the preceding claims, **characterized in that** it comprises the sorting of the first and second random values (u, v) and the calculation of the calculation means ($TC_M$) used in each cycle for each new execution of the algorithm.

**5.** A method according to any one of claims 1 to 4, **characterized in that** said calculation means ($TC_M$) are calculated from first calculation means ($TC_0$) defining, for input data (E), corresponding output data (S), by applying the second random value (v) to said input data (E ⊕ e(v)) and by applying the first random value (u) at least to said output data (s⊕+u) of the first calculation means.

**6.** A counter-measure method according to claim 5, **characterized in that** the calculation means ($TC_0$, $TC_M$) are constant tables.

**7.** An electronic security component adapted to the implementation of a counter-measure method against attacks by a differential analysis, said method comprising the implementation of a private-key (K) cryptographic algorithm comprising the carrying out of several successive calculation cycles (T1, ...T16) in order to provide, from first input data (L0, RO) applied to the first cycle (T1), final data (L16, R16) at the output of the last cycle (T16), allowing the production of an encrypted message (C), the component being **characterized in that** it comprises:

- a program memory (1), to store first calculation means (TCO),
- means (4) to generate, at each execution of the method, a first random value (u), a second random value (v) and calculation means (TCM) adapted to provide an output data by a OR-EXCLUSIVE to the first random value (S⊕u) from an input data combined to a second random value (E⊕v),
- a working memory (3) to store the calculation means (TCM) calculated, and
- means to combine by a OR-EXCLUSIVE the second random value to said first input data.

**8.** A chip card comprising an electronic security component according to claim 7.

**Patentansprüche**

**1.** Gegenmaßnahme-Verfahren gegen Attacken durch differentielle Analyse in einer elektronischen Komponente, die einen Verschlüsselungsalgorithmus mit Geheimschlüssel (K) verwendet, Verfahren dessen Verwendung die Durchführung mehrerer aufeinander folgender Rechenrunden (T1, ..., T16) umfasst, um ab auf die erste Runde (T1) angewendeten ersten Eingangsdaten (O, RO) am Ausgang der letzten Runde (T16) Enddaten (L16, R16) zu liefern, die die Erstellung einer chiffrierten Meldung (C) ermöglichen, wobei das Verfahren **gekennzeichnet ist durch**:

. die Verwendung bei jeder Rechenrunde von Rechenmitteln (TCM), um eine Ausgangsgröße zu liefern, die von einem ODER EXKLUSIV mit einem ersten Zufallswert (S(+)u) ab einer mit einem zweiten Zufallswert (E (+)e(v)) verknüpften Eingangsgröße verknüpft wird,
. die Verwendung von Verknüpfungsmitteln **durch** ODER EXKLUSIV des zweiten Zufallswerts (v) mit den ersten Eingangsdaten (L0, R0).

**2.** Gegenmaßnahme-Verfahren gemäß Anspruch 1, **dadurch gekennzeichnet, dass** es ferner die Verwendung von Verknüpfungsmitteln durch ODER EXKLUSIV des zweiten Zufallswerts (v) mit den von der letzten Runde (T16) gelieferten Enddaten umfasst.

**3.** Gegenmaßnahme-Verfahren gemäß einem der vorangehenden Ansprüche, **dadurch gekennzeichnet, dass** es ebenfalls, am Ende jeder Runde, die Ausführung einer zusätzlichen Operation (CP(p(u))) umfasst, um den genannten ersten Zufallswert (u) am Ausgang jeder Runde zu entfernen.

**4.** Gegenmaßnahme-Verfahren nach einem der vorangehenden Ansprüche, **dadurch gekennzeichnet, dass** es die Ziehung des ersten und zweiten Zufallswerts (u, v) und die Errechnung der Rechenmittel ($TC_M$) umfasst, die bei jeder Runde für jede neue Ausführung des Algorithmus verwendet werden.

**5.** Verfahren gemäß einem der Ansprüche 1 bis 4, **dadurch gekennzeichnet, dass** die genannten Rechenmittel ($TC_M$) ab ersten Rechenmitteln ($TC_0$) errechnet werden, die für Eingangsdaten (E) entsprechende Ausgangsdaten (S) definieren, unter Anwendung des zweiten Zufallswerts (v) auf die genannten Eingangsdaten (E(+)e(v)) und unter Anwendung des ersten Zufallswerts (u) zumindest auf die genannten Ausgangsdaten (s(+)u) der ersten Rechenmittel.

**6.** Gegenmaßnahme-Verfahren gemäß Anspruch 5, **dadurch gekennzeichnet, dass** die Rechenmittel ($TC_0$, $TC_M$) Konstantentabellen sind.

**7.** Elektronische Sicherheitskomponente, geeignet für die Verwendung eines Gegenmaßnahme-Verfahrens gegen Attacken durch differentielle Analyse, wobei das genannte Verfahren die Verwendung eines Verschlüsselungsalgorithmus mit Geheimschlüssel (K) umfasst, mit der Durchführung von mehreren aufeinander folgenden Rechenrunden (T1,..., T16), um ab auf die erste Runde (T1) angewendeten ersten Eingangsdaten (L0, R0) am Ausgang der letzten Runde Enddaten (L16, R16) zu liefern, die die Erstellung einer chiffrierten Meldung (C) ermöglichen, wobei die Komponente **gekennzeichnet ist durch**:

. einen Programmspeicher (1) zum Speichern der ersten Rechenmittel (TCO),
. Mittel (4) für die Erzeugung bei jeder Ausführung des Verfahrens eines ersten Zufallswerts (u), eines zweiten Zufallswerts (v) und Rechenmitteln (TCM), die geeignet sind, um eine Ausgangsgröße zu liefern, die von einem ODER EXKLUSIV mit dem ersten Zufallswert (S(+)u) ab einer mit einem zweiten Zufallswert (E(+)(v)) verknüpften Eingangsgröße verknüpft wird,
. einen Arbeitsspeicher (3) zum Speichern der errechneten Rechenmittel (TCM), und
. Mittel zum Verknüpfen **durch** ein ODER EXKLUSIV des zweiten Zufallswerts mit den genannten ersten Eingangsdaten.

8. Chipkarte, die eine elektronische Sicherheitskomponente gemäß Anspruch 7 enthält.

EP 1 159 797 B1

## FIG.1

EP 1 159 797 B1

## FIG.2

DPA(t)

t

FIG.3

FIG.4

FIG.5

TC₀ 1

| E=b1b2b3b4b5b6 | S=a1a2a3a4 |
|---|---|
| 000000 | 1101 |
| 000001 | 0101 |
| . | . |
| . | . |
| . | . |
| 111111 | 1010 |

FIG.6

FIG.10

(M,K)

Tirage de la valeur aléatoire u

CALCUL DE e(p(u))
CALCUL DE $TC_2 = (E \oplus e(p(u)), S \oplus u)$

L0,R0     SEQA[$TC_2$, CP(e(p(u)))]

G1
T1 (CP,$TC_2$)
T2 ($TC_2$)
T3 ($TC_2$)
T4 (CP,$TC_2$)

L4,R4     SEQA[$TC_2$, CP(e(p(u)))]

G2
T5 (CP,$TC_2$)
T6 ($TC_2$)
T7 ($TC_2$)
T8 (CP,$TC_2$)

L8,R8     SEQA[$TC_2$, CP(e(p(u)))]

G3
T9 (CP,$TC_2$)
T10 ($TC_2$)
T11 ($TC_2$)
T12 (CP,$TC_2$)

L12,R12     SEQA[$TC_2$, CP(e(p(u)))]

G4
T13 (CP,$TC_2$)
T14 ($TC_2$)
T15 ($TC_2$)
T16 (CP,$TC_2$)

L16,R16

Calcul du message chiffré C

## FIG.7

EP 1 159 797 B1

# FIG.8

(figure)

19

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0027068 A
- FR 2785477

- FR 9813605

**Littérature non-brevet citée dans la description**

- **NAKAO Y et al.** THE SECURITY OF AN RDES CRYPTOSYSTEM AGAINST LINEAR CRYPTAN-ALYSIS. *IEICE TRANSACTIONS ON FUNDAMEN-TALS OF ELECTRONICS, COMMUNICATIONS AND COMPUTER SCIENCES, JP, INSTITUTE OF ELECTRONICS INFORMATION AND COMM.ENG.TOKYO,* vol. E79-A (1), 12-19